# EUROPÄISCHE PATENTSCHRIFT

(11) **EP 1 542 838 B1**
(45) Veröffentlichungstag und Bekanntmachung des Hinweises auf die Patenterteilung: **25.07.2007**
(21) Anmeldenummer: 03753303.1
(22) Anmeldetag: 13.09.2003
(51) Int. Cl.: B26D 3/28

(54) **ANORDNUNG ZUM NACHSCHNEIDEN VON SCHEIBENWISCHERBL TTERN**
ARRANGEMENT FOR RETRO-ACTIVELY CUTTING WIPER BLADES
DISPOSITIF PERMETTANT DE RECOUPER DES RACLETTES D'ESSUIE-GLACES

(30) Priorität: 20.09.2002 DE 10243690
(43) Veröffentlichungstag der Anmeldung: 22.06.2005
(73) Patentinhaber: Sieke, Harald, 64285 Darmstadt (DE); Sieke, Martin, 64283 Darmstadt (DE)
(72) Erfinder: Sieke, Harald, 64285 Darmstadt (DE); Sieke, Martin, 64283 Darmstadt (DE)
(74) Vertreter: Katscher Habermann Patentanwälte
(86) Internationale Anmeldenummer: PCT/DE2003/003050
(87) Internationale Veröffentlichungsnummer: WO 2004/028761

(56) Entgegenhaltungen:
- DE-A- 3 120 679
- DE-A- 3 509 786
- DE-A- 3 510 738
- DE-A- 4 110 799
- DE-U- 8 633 841
- DE-U- 8 716 269
- DE-U- 9 311 510
- DE-U- 9 405 275
- DE-U- 29 606 561
- US-A- 4 604 802
- US-A- 5 848 471

## Beschreibung

Die Erfindung betrifft eine Anordnung zum Nachschneiden von Scheibenwischerblättern mit einer ersten Führung, welche in beidseitige Nuten des Scheibenwischerblattes eingreift, und einer zweiten Führung, welche die Lippe des Scheibenwischerblattes in der Nähe der nachzuschneidenden Kante umfasst, gemäß dem Oberbegriff des Anspruchs 1. Eine derartige Anordnung ist aus dem Dokument DE29606561U bekannt.

Die Qualität des Wischvorganges bei Scheibenwischern hängt stark vom Zustand der Kanten des Scheibenwischerblattes ab. Durch an der Windschutzscheibe haftende scharfkantige Partikel oder durch Umwelteinflüsse und alterungsbedingte oberflächliche Verhärtung treten jedoch an den Kanten der Scheibenwischerblätter Beschädigungen auf, die das Wischergebnis verschlechtern oder zu Geräuschentwicklung führen. Es wird daher ein regelmäßiges Auswechseln der Scheibenwischerblätter empfohlen, was verhältnismäßig kostspielig ist. Deshalb wurden bereits Vorschläge zur Aufarbeitung von Scheibenwischerblättern gemacht, nämlich durch Abschleifen oder durch Nachschneiden.

Eine Vorrichtung zum Nachschneiden ist beispielsweise durch DE 86 33 841 U1 bekanntgeworden. Bei dieser Vorrichtung wird das nachzuschneidende Scheibenwischerblatt durch eine Führungsnut gezogen, die etwa das Negativ-Profil des Scheibenwischerblattes aufweist und in welcher höhenverstellbar eine viertelkreisförmige Klinge angeordnet ist. Ein Nachschneiden von Scheibenwischerblättern ist jedoch nur sinnvoll, wenn ein äußerst exakter Schnitt durchgeführt wird. Dies ist mit dem bekannten Scheibenwischerhobel jedoch nicht möglich, unter anderem deshalb, weil bedingt durch die Schneidkräfte an der viertelkreisförmig geformten Klinge die Lippe des Scheibenwischerblattes in unvorteilhafter Weise verformt wird.

Eine ähnliche Vorrichtung, jedoch mit einem geradlinig verlaufenden Messer ist durch DE 94 05 275 U1 bekannt geworden. Ferner ist eine Vorrichtung mit einer Führung, die im Wesentlichen dem Querschnitt des Wischerblattes entspricht, aus US 5,848,471 bekannt. Alle diese Vorrichtungen haben den Nachteil, dass sie nur für bestimmte Scheibenwischerblätter brauchbar sind.

Durch DE 35 10 738 A1ist ein Scheibenwischerlippennachschneidegerät bekanntgeworden, bei welchem das Scheibenwischerblatt zweifach geführt wird. Die eine Führung hält das Scheibenwischerblatt im Bereich der beidseitigen Nuten, die am Scheibenwischerblatt dazu dienen, dass die Lippe mit dem Richtungswechsel des Wischvorganges umklappen kann, so dass es stets über die Scheibe gezogen - und nicht geschoben - wird. Eine zweite Führung befindet sich bei dem bekannten Scheibenwischerlippennachschneidegerät in der Nähe der nachzuschneidenden Kante. Wegen möglicherweise verschiedener Breiten der Lippen ist bei diesem bekannten Gerät eine automatische Anpassung der Weite dieser Führung an die jeweilige wischerlippenbreite vorgesehen. Dies geschieht dadurch, dass die Lippe unter Vorspannung in die von zwei parallel verlaufenden Blechstreifen gebildete Führung eingebracht wird. Dadurch entstehen in der zweiten Führung Reibungskräfte, welche ebenfalls in einer den Schneidvorgang beeinträchtigenden Weise die empfindliche Lippe verformen.

Ferner ist aus DE 41 10 799 A1ein Kantenschneider für Wischgummis von Scheibenwischern bekannt geworden; bei dem in einem mittleren Bereich zwischen einer Führung und der nachzuschneidenden Kante seitliche Abstützungen vorgesehen sind, die unabhängig voneinander jeweils seitlich verstellbar sind. Insbesondere durch Fehleinstellungen und durch die Entfernung zur nachzuschneidenden Kante kann es dabei zu fehlerhaften Schnitten kommen.

Aus DE 35 09 786 A1 ist eine Nachschneideeinrichtung für Scheibenwischerblätter bekannt geworden mit einem Leitprofil und einem Schälmesser, das zur Einstellung verschiedener Schnitthöhen in verschiedene Führungen eingebracht werden kann. Durch das fest vorgegebene Leitprofil und die stufige Anordnung der Führungen können Scheibenwischerblätter beliebiger Höhe jedoch nicht mit beliebiger Schnitthöhe optimal geschnitten werden.

Aufgabe der vorliegenden Erfindung ist es, mit einer für jedermann handhabbaren Anordnung einen einwandfreien Schnitt beim Nachschneiden von Scheibenwischerblättern zu erzielen. Diese Aufgabe wird durch die Merkmale des Anspruchs 1 gelöst.

Die Erfindung beruht auf der Erkenntnis, dass Verformungen des Scheibenwischerblattes und insbesondere der Lippe zu unregelmäßigen Schnitten, unter anderem zu wellenförmigen Abweichungen von der Ideallinie führen. Insbesondere durch die Ausgestaltung der zweiten Führung werden daher Verformungen des Scheibenwischerblattes weitgehend vermieden, wozu ferner eine möglichst dünne Klinge beiträgt. In eingehenden Versuchen hat sich ergeben, dass mit einer festen Weite der zweiten Führung die Lippen fast aller erhältlichen Scheibenwischerblätter insoweit ausreichend gut geführt werden, dass ein einwandfreier Schnitt entsteht.

Die Erfindung kann vorzugsweise als einfaches Gerät ausgebildet sein, durch welches das nachzuschneidende Scheibenwischerblatt per Hand geführt wird. Es ist jedoch auch ein mechanischer oder automatisierter Betrieb einschließlich eines motorischen Antriebs möglich. Zur Kontrolle kann auch ein Zähler vorgesehen sein für die durchgeführten Schneidvorgänge.

Im folgenden wird für die Bewegungsrichtung auch der Ausdruck Längsrichtung des Scheibenwischerblattes, für die dazu querliegende Richtung der Ausdruck Querrichtung gebraucht. Die Richtung senkrecht zur von den Wischerkanten definierten Ebene wird im folgenden auch als Abtragrichtung bezeichnet.

Eine Einführung des Scheibenwischerblattes in die zweite Führung wird dadurch erleichtert, dass sich die zweite Führung in Bewegungsrichtung von einer größeren Weite auf die feste Weite verengt. Dieses kann durch einen V-förmigen Einführungsbereich der zweiten Führung erreicht werden, an den sich ein Bereich mit der festen Weite anschließt. Im Rahmen der Erfindung sind jedoch auch andere Formen der zweiten Führung möglich, die eine Einführung erleichtern, beispielsweise gebogene oder kugelförmige Führungen.

Eine vorteilhafte Ausgestaltung besteht darin, dass die zweite Führung eine Tiefe aufweist, welche den abzuschneidenden Teil der Lippe umfasst.

Da der abgeschnittene Teil der Lippe einen sehr dünnen und damit flexiblen Streifen darstellt, der sich keinesfalls verklemmen darf, ist bei einer anderen vorteilhaften Ausgestaltung vorgesehen, dass sich die zweite Führung, beginnend bei der Schneidkante der Klinge, zu einem Abfallkanal aufweitet. Vorzugsweise weist der Abfallkanal eine Weite und eine Tiefe von mindestens dem Zweifachen der Breite der Lippe auf. Dieser Abfallkanal geht vorzugsweise möglichst kurz hinter der Schnittkante in einen Abfallkanal mit größerem Querschnitt über.

Bei der Erfindung ist vorzugsweise vorgesehen, dass die erste Führung Teil eines Grundkörpers ist und dass die Schneideinheit im Grundkörper verstellbar gelagert ist und/oder dass im Grundkörper ein weiterer Abfallkanal angeordnet ist, dessen Querschnitt mindestens demjenigen des Abfallkanals entspricht, und/oder dass zum Verstellen an der Schneideinheit eine Spindel angeordnet ist, die mit einer in einer Aussparung des Grundkörpers gelagerten Spindelmutter in spielfreier Wirkverbindung steht.

Um während des Schneidvorganges eine Verstellung zu verhindern, kann gemäß einer anderen vorteilhaften Ausgestaltung vorgesehen sein, dass die Stellung der Schneideinheit arretierbar ist. Es hatte sich als günstig herausgestellt, wenn die erste Führung länger als die zweite Führung ist, nämlich vorzugsweise zwischen 70 mm und 200 mm lang ist.

Hierbei trägt zu einer stabilen Führung des Scheibenwischerblattes bei, wenn die erste Führung in Längsrichtung des Scheibenwischerblattes gekrümmt ist. Grundsätzlich ist jedoch auch eine gerade oder nur teilweise gekrümmte erste Führung sinnvoll.

Um eine Einstellung der Schneidtiefe jeweils angepasst an die aktuelle Höhe der Lippe zu ermöglichen, ist bei einer Weiterbildung der Erfindung vorgesehen, dass eine Messeinrichtung vorgesehen ist. Im Einzelnen kann die Messeinrichtung von einer Skala in einem das Scheibenwischerblatt aufnehmenden Kanal und einer Einblicköffnung oder von einer Skala beidseitig eines das Scheibenwischerblatt aufnehmenden Kanals und einem beweglichen Anschlag oder von einem beweglichen Messfühler gebildet sein.

Eine andere Möglichkeit zur Erleichterung der Einstellung der Schneidtiefe besteht darin, dass in einem vorgegebenen Abstand von der Klinge in Abtragrichtung gemessen eine Durchblickeinrichtung vorgesehen ist. Entspricht der vorgegebene Abstand der gewünschten Schneidtiefe, so kann die Einstellung der Schneidtiefe wie folgt vorgenommen werden:

Verstellt ein Benutzer die Schneidtiefe und blickt dabei durch die Durchblickeinrichtung, ist die Schneidtiefe dann richtig eingestellt, wenn die Kante des Scheibenwischerblattes gerade den Durchblick freigibt oder versperrt - je nachdem in welcher Richtung die Verstellung erfolgt. Der Abstand kann jedoch auch anders gewählt werden, so dass die Schneidtiefe nach der Beobachtung um einen vorgegebenen Weg geändert werden muss, beispielsweise durch eine Umdrehung einer Stellschraube.

Eine andere Weiterbildung der erfindungsgemäßen Anordnung besteht darin, dass die zweite Führung mit einer die Reibung vermindernden Oberfläche versehen ist. Dieses kann durch Aufbringen einer entsprechenden Schicht, beispielsweise Teflon, durch Aufbringen eines Gleitmittels und/oder durch geeignete Strukturierung der Oberfläche geschehen.

Eine andere vorteilhafte Ausgestaltung besteht darin, dass in einem Körper mehrere erste Führungen angeordnet sind. Ferner kann vorgesehen sein, dass ein Körper die Form eines hohlen, einseitig offenen Zylinders oder Prismas aufweist, der/das einen Grundkörper mit einer Schneideinheit deckelartig umfasst, wobei der Körper und der Grundkörper in Richtung ihrer Achse gegeneinander verstellbar sind. Das Prisma kann Grundflächen in Form eines gleichseitigen Polygoms aufweisen. Die Verstellung kann vorzugsweise dadurch erzielt werden, dass der Zylinder oder das Prisma und der Grundkörper zur Verstellung mittels eines Gewindes verdrehbar miteinander verbunden sind.

Bei einer vorteilhaften Ausgestaltung der Erfindung ist vorgesehen, dass die Schnittkante der Klinge senkrecht zur Bewegungsrichtung und senkrecht zur Abtragrichtung liegt. Damit lassen sich gute Schneidergebnisse erreichen. Es sind jedoch auch andere Winkellagen und Formen der Klingen möglich.

So kann beispielsweise vorgesehen sein, dass die Klinge in Abtragrichtung schräg gestellt ist, dass die Klinge in Abtragrichtung derart geknickt ist, dass die Schnittfläche V-förmig ist, dass die Klinge in Abtragrichtung derart gebogen ist, dass eine konkave Schnittfläche entsteht und/oder dass die Schnittkante der Klinge pfeilförmig in Bewegungsrichtung des Scheibenwischerblattes verläuft.

Bei der erfindungsgemäßen Anordnung wird vorzugsweise eine äußerst dünne Klinge verwendet, die an sich eine geringe Stabilität aufweist. Um trotzdem saubere Schnitte zu erhalten, sind gemäß einer Weiterbildung der Erfindung Mittel zur Fixierung der Lage der Klinge im Schnittbereich vorgesehen. Damit wird die Klinge bezüglich ihrer Lage, insbesondere der Schneidtiefe, ihrer Torsion und ihrer Drehung festgehalten.

Vorzugsweise liegt die Klinge fest auf an den Schnittbereich unmittelbar angrenzenden Flächen auf. Dies kann durch Einspannen oder Kleben erfolgen. Auch für den Fall, dass aus konstruktiven Gründen die eigentliche Fixierung von der zweiten Führung entfernt erfolgt, kann die Fixierung an den Flächen, die unmittelbar an den Schnittbereich angrenzen, durch geeignete Biege- und/oder Zugspannung gewährleistet sein.

Eine andere Möglichkeit zur Einstellung der Schneidtiefe kann gegeben sein durch eine Begrenzung der ersten Führung in Abtragrichtung, die mit der Schneideinheit verstellbar ist und eine vorgegebene Position zur Schnittkante in Abtragrichtung aufweist. Der Benutzer kann dazu die Schneidtiefe solange vergrößern, bis die Begrenzung an der nachzuschneidenden Fläche des Scheibenwischerblattes anliegt, und danach diese Einstellung wieder etwas zurücknehmen.

Eine weitere vorteilhafte Einrichtung zur Messung der Schneidtiefe ist dadurch gebildet, dass ein zusammen mit der Klinge verstellbarer Anschlag vorgesehen ist und eine Führung, welche in mindestens eine der Nuten des Scheibenwischerblattes eingreift, dem Anschlag gegenübersteht.

Diese Einrichtung kann derart ausgebildet sein, dass der Anschlag am Ende eines für das Scheibenwischerblatt vorgesehenen Kanals angeordnet ist und dass die Führung von einem Endbereich der ersten Führung gebildet ist. Dabei kann der Anschlag aus dem Kanal herausragen oder nicht. Der Anschlag sollte jedoch sichtbar sein.

Die Messeinrichtung kann auch derart ausgebildet sein, dass der Anschlag seitlich aus der Anordnung herausragt und eine an der Längsseite der Anordnung angeformte Leiste die Führung bildet.

Ausführungsbeispiele der Erfindung sind in der Zeichnung anhand mehrerer Figuren dargestellt und in der nachfolgenden Beschreibung näher erläutert. Es zeigt:
- Fig. 1: eine räumliche Darstellung eines Ausführungsbeispiels,
- Fig. 2 bis Fig. 6: verschiedene Ansichten des gleichen Ausführungsbeispiels,
- Fig. 7 bis Fig. 10: verschiedene Ausführungsbeispiele mit einer Messeinrichtung,
- Fig. 11 bis Fig. 13: verschiedene Ansichten einer Schneideinheit,
- Fig. 14 bis Fig. 20: verschiedene Ausführungsbeispiele für die Schneideinheit,
- Fig. 21 und Fig. 22: zwei Ansichten eines weiteren Ausführungsbeispiels der erfindungsgemäßen Anordnung,
- Fig. 23: eine Einrichtung zur Messung der Schneidtiefe und
- Fig. 24: eine weitere Einrichtung zur Messung der Schneidtiefe.

In den Figuren werden gleiche Bezugszeichen für Teile verwendet, die ihrer Funktion nach gleich sind, sich aber in den Details voneinander unterscheiden können.

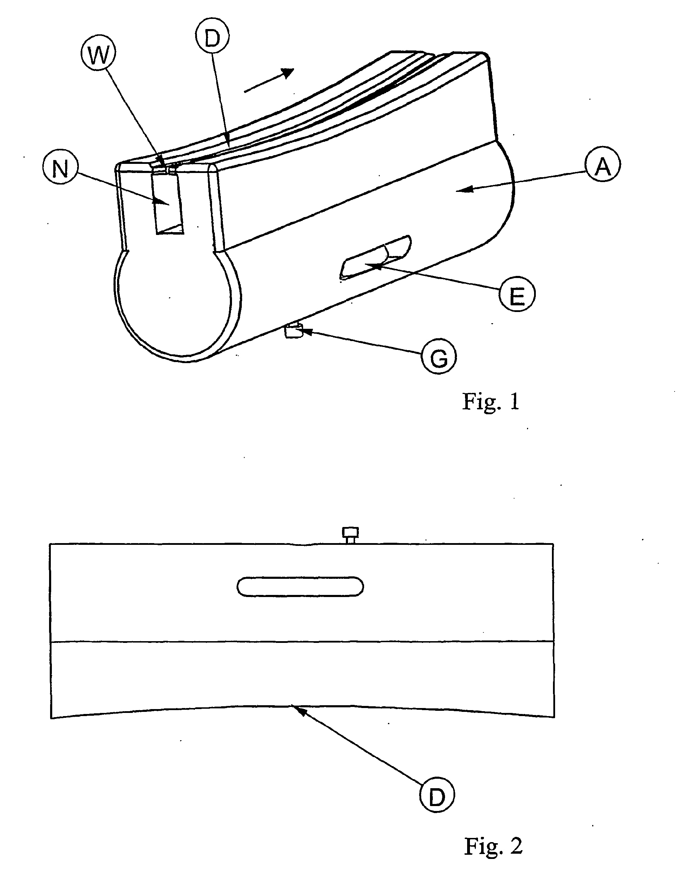

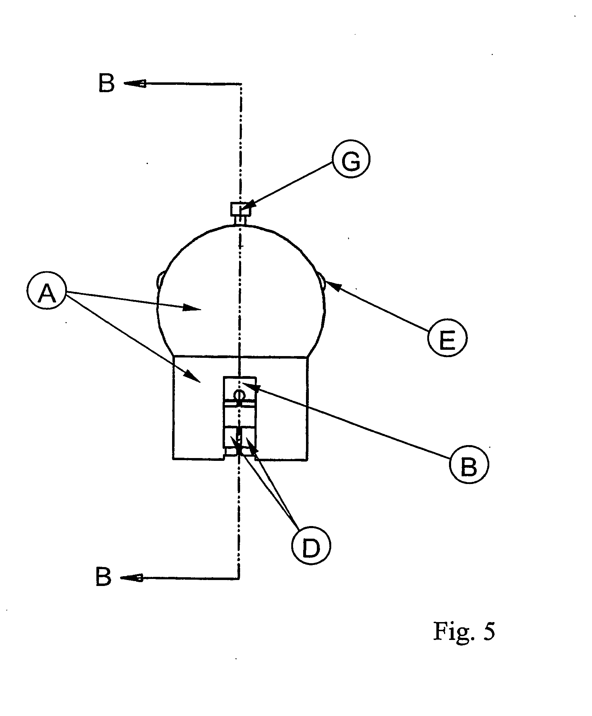

Das in den Figuren 1 bis 6 dargestellte Ausführungsbeispiel weist einen Grundkörper A auf, der derart gestaltet ist, dass er leicht in der Hand gehalten werden kann. In Längsrichtung wird der Grundkörper von einem Kanal N durchzogen, der von zwei Stegen begrenzt ist, welche die erste Führung - im folgenden auch 2D-Wischerführung genannt - bilden. An einem Ende der 2D-Wischerführung befindet sich eine Einführhilfe W. Durch die Krümmung der 2D-Wischerführung wird eine gute Positionierung und eine leichte Vorspannung des nicht dargestellten Scheibenwischerblattes erzeugt, welche zur Stabilisierung beim Schneidvorgang beiträgt.

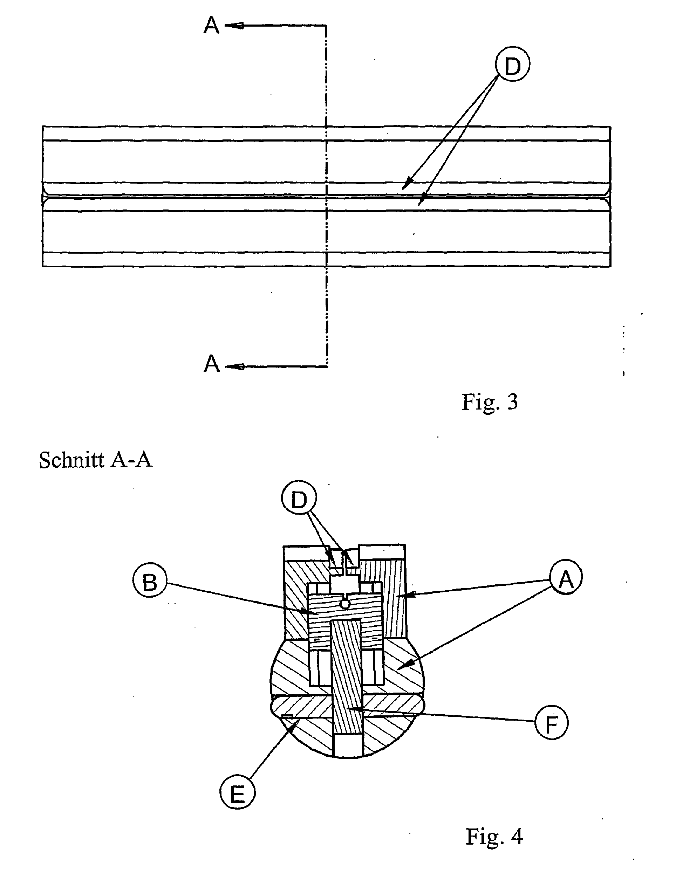

Innerhalb des Grundkörpers A ist eine Schneideinheit B verschiebbar gelagert, wozu sie entsprechende Führungselemente aufweist, die später erläutert werden. Mit der in Fig. 4 dargestellten senkrechten Verstelleinrichtung wird der Abstand zwischen der ersten und der zweiten Führung und damit der Klinge eingestellt. Dazu ist die Schneideinheit B mit einer Gewindestange F verbunden. Ein Einstellrad E weist ein entsprechendes Gewinde auf, so dass durch Drehen des Einstellrades die Schneideinheit B verschoben werden kann. Gegebenenfalls ist an dem Einstellrad eine Skala zum Ablesen der jeweiligen Einstellung vorgesehen.

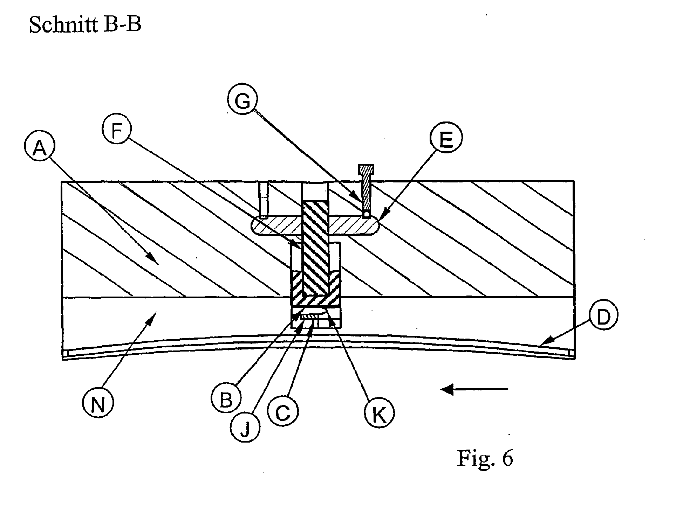

Zum Fixieren des Einstellrades ist eine Schraube G mit einem gerändelten Kopf vorgesehen. Die Schneideinheit B ragt in den Kanal N hinein und umfasst die zweite Führung L, die Klinge J und einen Einführungskanal K für die Lippe, die in Fig. 6 von rechts in Pfeilrichtung zugeführt wird.

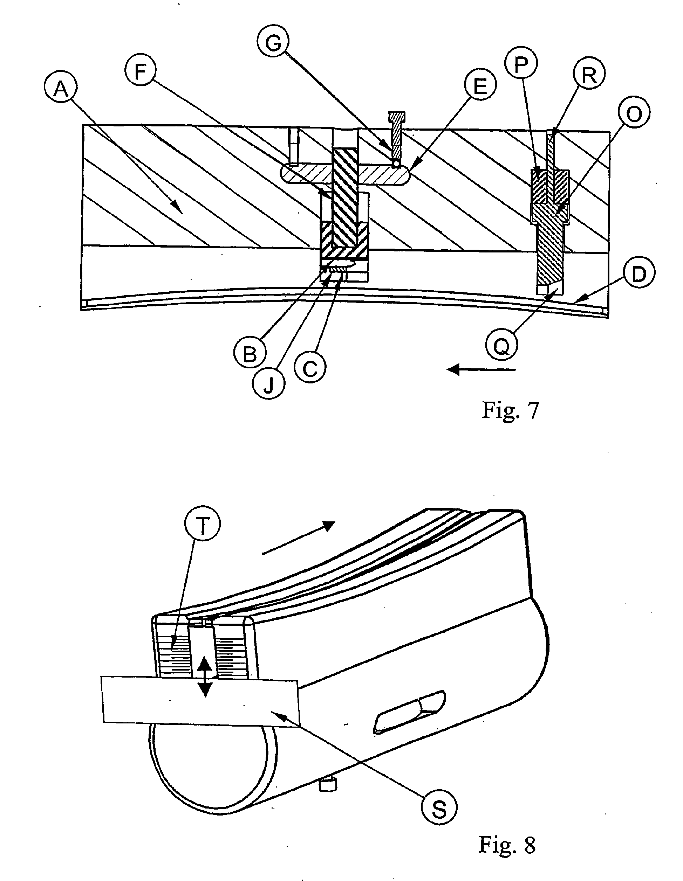

Bei dem Ausführungsbeispiel nach Fig. 7 ist zusätzlich eine Messeinrichtung in den Grundkörper A integriert. Diese besteht aus einem Messstift 0, der von einer Feder P nach unten gedrückt wird, wobei ein Einführungskanal Q für die Lippe vorgesehen ist. Wird die Lippe eingeführt, bewegt sich der Messstift entgegen der Kraft der Feder P nach oben, so dass ein Fortsatz R des Messstiftes 0 aus der Oberfläche des Grundkörpers A heraustritt. Der Fortsatz ist mit einer nicht dargestellten Skala versehen, auf welcher die Höhe der Lippe abgelesen werden kann. Diese Ablesung wird dann mit Hilfe des Einstellrades E auf die Schneideinheit B übertragen.

Fig. 8 stellt ein Ausführungsbeispiel dar mit einer anderen Messeinrichtung, und zwar sind hier an der Stirnseite des Grundkörpers zu beiden Seiten des Kanals Skalen T angebracht. Bei der Einführung des Scheibenwischerblattes kann eine Lehre S in Richtung des Doppelpfeiles gegen das Scheibenwischerblatt verschoben und somit die Höhe des Scheibenwischers ermittelt werden. Der ermittelte Wert wird dann zur Einstellung der Schneidtiefe verwendet.

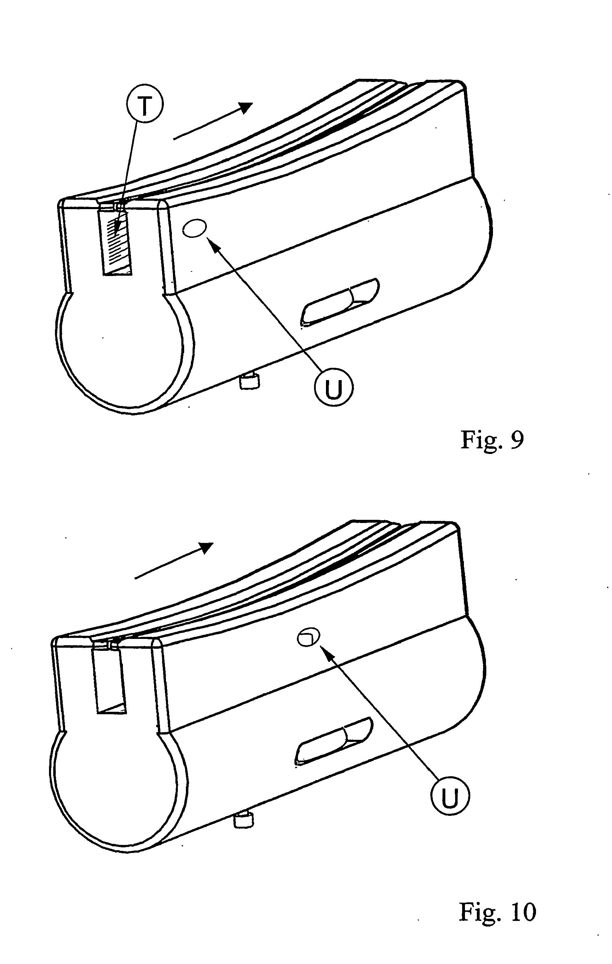

Eine andere Möglichkeit zur Ermittlung der Schnitteinstellung zeigt Fig. 9, wobei die Skala T innerhalb des Kanals angeordnet ist und die Ablesung durch ein Sichtfenster U, das gegebenenfalls als Lupe ausgeführt sein kann, bei teilweise eingeführtem Scheibenwischerblatt vorgenommen werden kann.

Fig. 10 zeigt ein Ausführungsbeispiel mit einem Sichtloch U, das in Querrichtung durch den Grundkörper geht. In der Schneideinheit ist ein kleineres Sichtloch. Die Schneidtiefe wird dann so eingestellt, dass das kleinere Sichtloch gerade mit der zu schneidenden Kante des Scheibenwischerblattes übereinstimmt.

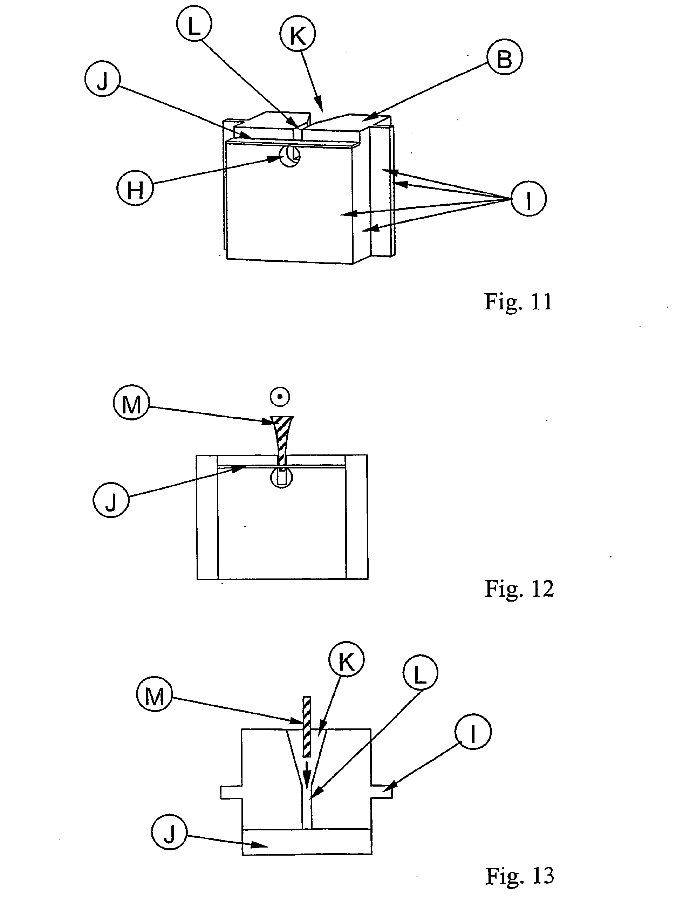

Die in den Figuren 11 bis 13 dargestellte Schneideinheit weist zwei Führungsstege und Führungsflächen I auf, welche in entsprechend geformte Teile des Grundkörpers ohne Spiel passen. Ein Einführungskanal K verjüngt sich in Bewegungsrichtung des Scheibenwischerblattes zur zweiten Führung L. Daran schließt sich die Klinge J an. Unmittelbar unter der Schneide der Klinge J weitet sich die Führung L zu einem Abfallkanal H auf, in welchem der abgeschnittene Streifen ungehindert austreten kann.

Fig. 12 zeigt ferner die Scheibenwischerlippe M in ihrer Lage in der Schneideinheit in Relation zu der Klinge J beim Einführen. Fig. 13 stellt das vordere Ende der Scheibenwischerlippe M dar während der Einführung über den Einführungskanal K in die zweite Führung L.

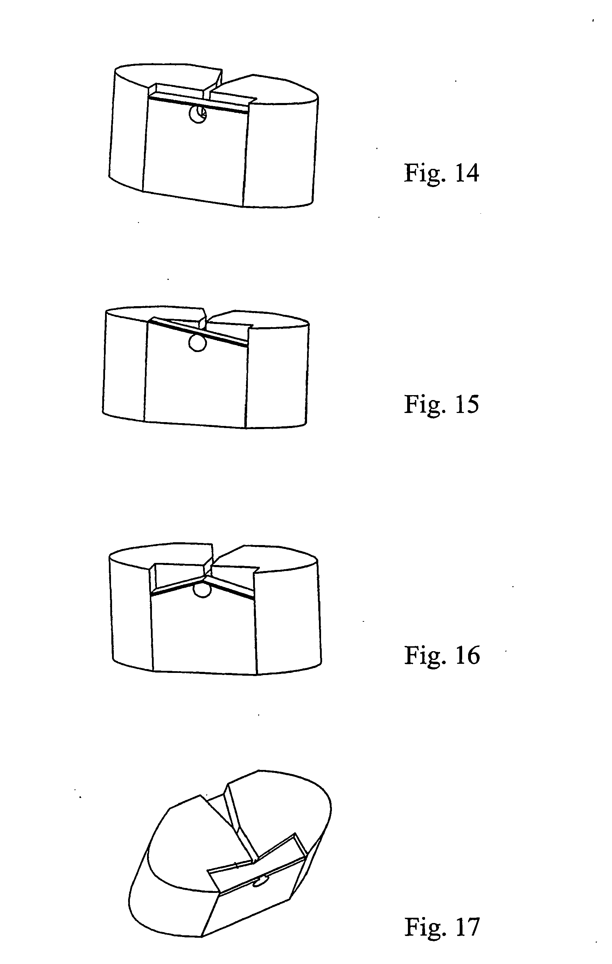

Die Figuren 14 bis 20 zeigen verschiedene Ausführungsbeispiele der Schneideinheit, die sich unter anderem durch eine andere Form der Führung innerhalb des Grundkörpers von der bisher erläuterten Schneideinheit unterscheiden.

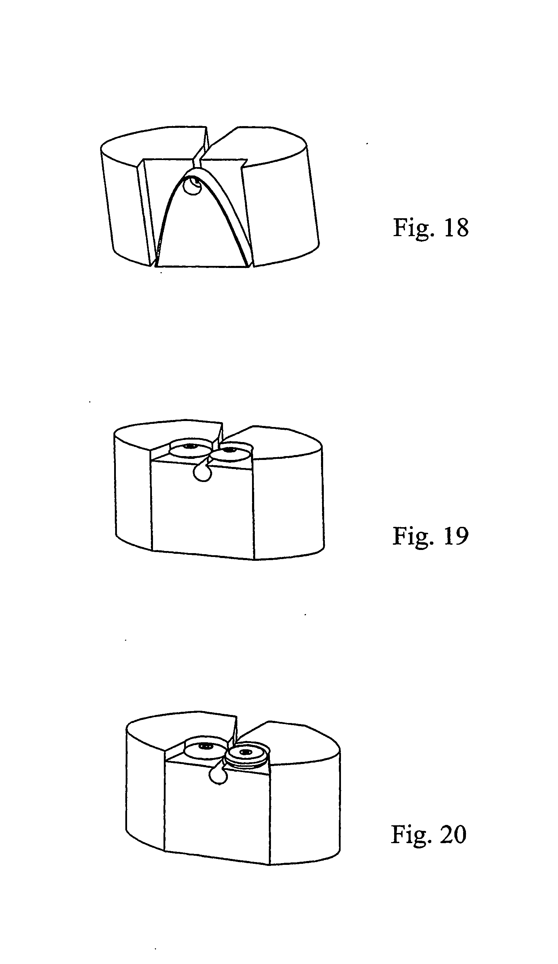

In den Figuren 14 bis 20 sind verschiedene Klingenanordnungen dargestellt, die im Rahmen der Erfindung benutzt werden können. So ist in Fig. 14 eine gerade, in Fig. 15 eine schräge Klinge, in Fig. 16 eine geknickte Klinge und in Fig. 18 eine gebogene Klinge dargestellt, während die Klinge nach Fig. 17 eine pfeilförmige Schneide aufweist.

Im Rahmen der Erfindung sind auch Schneidräder möglich. So sind beispielsweise in Fig. 19 zwei gegenläufige Schneidräder dargestellt, während in Fig. 20 ein Schneidrad mit einer Gegenlauffläche gezeigt ist.

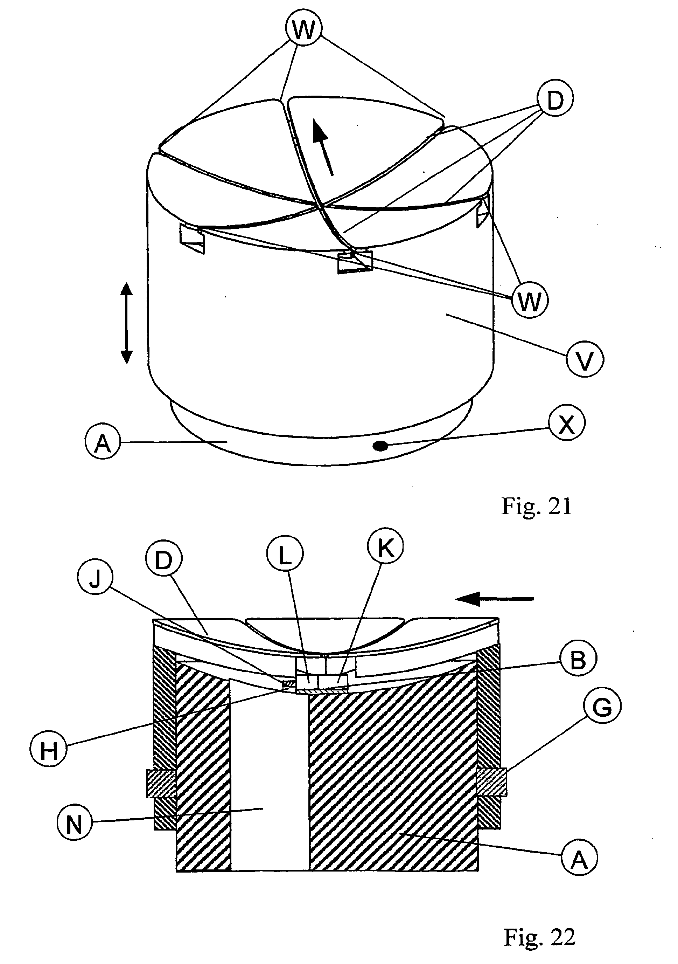

Fig. 21 und Fig. 22 zeigen eine erfindungsgemäße Anordnung mit drei 2D-Wischerführungen D, die in einem hohlzylinderförmigen Körper V angeordnet sind. Entsprechend sind drei Einführungskanäle W für Scheibenwischerblätter vorgesehen. Durch Drehen des schalenförmigen Körpers V um einen zylinderförmigen Grundkörper A, der die Schneideinheit B (Fig. 21) trägt, kann hier ebenfalls die Schnitthöhe verstellt werden. Eine Markierung X zeigt an, auf welche der 2D-Wischerführungen D der Grundkörper A mit der Schneideinheit B eingestellt ist.

Der Abfallkanal N verläuft bei diesem Ausführungsbeispiel nicht parallel zum Kanal für den Scheibenwischer, sondern senkrecht nach unten. Eine weitere Einstellmöglichkeit der erforderlichen Schnittstärke könnte bei diesem Ausführungsbeispiel in den unterschiedlichen Wölbungen des Körpers V und des Grundkörpers A liegen, die derart aufeinander abgestimmt sein können, dass der Grundkörper A mit der obersten Kante gegen die Wischerlippe fährt und für die nächste Schnittmöglichkeit zurückgestellt werden kann.

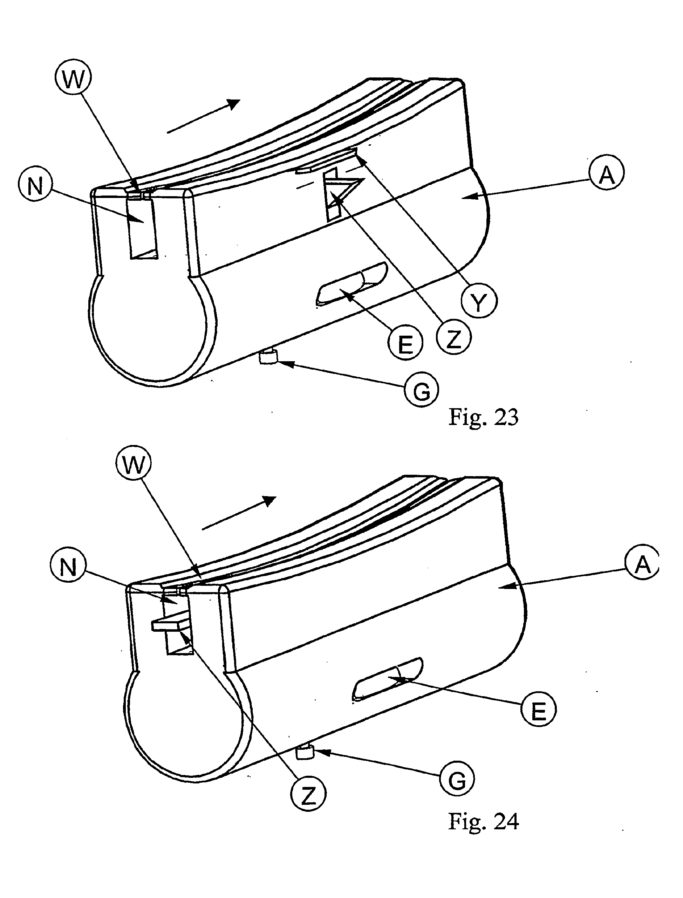

Die Figuren 23 und 24 zeigen Ausführungsbeispiele mit jeweils einer Messeinrichtung, mit welcher die Schneidtiefe bestimmt und damit die Schneideinheit eingestellt werden kann. Bei dem Ausführungsbeispiel nach Fig. 23 ragt ein Anschlag Z seitlich durch einen länglichen Schlitz aus dem Grundkörper heraus. Der Anschlag Z ist fest mit der Schneideinheit verbunden - und zwar derart, dass die Oberkante des Anschlags um dasjenige Stück, was von der Scheibenwischerlippe abgeschnitten werden soll, tiefer als die Schneide liegt. Eine Führung Y, die auf gleicher Höhe wie die erste Führung W liegt, wird bei der Einstellung der Schneidtiefe in die Nut des Scheibenwischerblattes eingeführt, worauf der Anschlag Z mit Hilfe des Einstellrades derart eingestellt wird, dass er gerade die noch nicht geschnittene Kante des Scheibenwischerblattes berührt,

Die Lage der Führung Y des Anschlags Z kann gegenüber der innerhalb der Anordnung befindlichen ersten Führung und der Schneide auch verschoben sein. Wichtig ist, dass die relative Lage der Führung zum Anschlag mit der gewünschten Schneidtiefe übereinstimmt.

Bei dem Ausführungsbeispiel nach Fig. 24 ragt der Anschlag Z aus dem Kanal N heraus. Die erste Führung W dient in diesem Fall auch als Führung für die Messzwecke.

## Patentansprüche

1. Anordnung zum Nachschneiden von Scheibenwischerblättern mit einer ersten Führung (D), welche in beidseitige Nuten des Scheibenwischerblattes eingreift, und einer zweiten Führung (L), welche die Lippe (M) des Scheibenwischerblattes in der Nähe der nachzuschneidenden Kante umfasst, wobei die zweite Führung (L) mit einer Klinge (J) eine Schneideinheit (B) bildet, dass die Schneideinheit (B) und die erste Führung (D) zueinander in Abtragrichtung verstellbar sind, **dadurch gekennzeichnet dass** die zweite Führung (L) eine feste Weite derart aufweist, dass die Lippe (M) des Scheibenwischerblattes leichtgängig geführt wird.

2. Anordnung nach Anspruch 1, **dadurch gekennzeichnet, dass** sich die zweite Führung (L) in Bewegungsrichtung von einer größeren Weite auf die feste Weite verengt.

3. Anordnung nach einem der vorhergehenden Ansprüche, **dadurch gekennzeichnet, dass** die zweite Führung (L) eine Tiefe aufweist, welche den abzuschneidenden Teil der Lippe (M) umfasst.

4. Anordnung nach einem der vorhergehenden Ansprüche, **dadurch gekennzeichnet, dass** sich die zweite Führung (L), beginnend bei der Schneidkante der Klinge (J), zu einem Abfallkanal (H) aufweitet.

5. Anordnung nach Anspruch 4, **dadurch gekennzeichnet, dass** der Abfallkanal (H) eine Weite und eine Tiefe von mindestens dem Zweifachen der Breite der Lippe (M) aufweist.

6. Anordnung nach einem der Ansprüche 1 bis 5, **dadurch gekennzeichnet, dass** die erste Führung (D) Teil eines Grundkörpers (A) ist und dass die Schneideinheit (B) im Grundkörper (A) verstellbar gelagert ist.

7. Anordnung nach Anspruch 6, **dadurch gekennzeichnet, dass** im Grundkörper (A) ein weiterer Abfallkanal (N) angeordnet ist, dessen Querschnitt mindestens demjenigen des Abfallkanals (H) entspricht.

8. Anordnung nach einem der Ansprüche 6 oder 7, **dadurch gekennzeichnet, dass** zum Verstellen an der Schneideinheit (B) eine Spindel (F) angeordnet ist, die mit einer in einer Aussparung des Grundkörpers (A) gelagerten Spindelmutter (E) in spielfreier Wirkverbindung steht.

9. Anordnung nach einem der vorhergehenden Ansprüche, **dadurch gekennzeichnet, dass** die Stellung der Schneideinheit (B) arretierbar ist.

10. Anordnung nach einem der vorhergehenden Ansprüche, **dadurch gekennzeichnet, dass** die erste Führung (D) länger als die zweite Führung (L) ist.

11. Anordnung nach einem der vorhergehenden Ansprüche, **dadurch gekennzeichnet, dass** die erste Führung (D) zwischen 70 mm und 200 mm lang ist.

12. Anordnung nach einem der vorhergehenden Ansprüche, **dadurch gekennzeichnet, dass** die erste Führung (D) in Längsrichtung des Scheibenwischerblattes gekrümmt ist.

13. Anordnung nach einem der vorhergehenden Ansprüche, **dadurch gekennzeichnet, dass** eine Messeinrichtung (O, P, Q, R; T, S, U) vorgesehen ist.

14. Anordnung nach Anspruch 13, **dadurch gekennzeichnet, dass** die Messeinrichtung von einer Skala (T) in einem das Scheibenwischerblatt aufnehmenden Kanal und einer Einblicköffnung (U) gebildet ist.

15. Anordnung nach Anspruch 13, **dadurch gekennzeichnet, dass** die Messeinrichtung von einer Skala (T) beidseitig eines das Scheibenwischerblatt aufnehmenden Kanals und einem beweglichen Anschlag (S) gebildet wird.

16. Anordnung nach Anspruch 13, **dadurch gekennzeichnet, dass** die Messeinrichtung von einem beweglichen Messfühler (O) gebildet wird.

17. Anordnung nach einem der Ansprüche 1 bis 13, **dadurch gekennzeichnet, dass** in einem vorgegebenen Abstand von der Klinge in Abtragrichtung gemessen eine Durchblickeinrichtung vorgesehen ist.

18. Anordnung nach einem der vorhergehenden Ansprüche, **dadurch gekennzeichnet, dass** mindestens eine der Führungen (D, L) mit einer die Reibung vermindernden Oberfläche versehen ist.

19. Anordnung nach einem der vorhergehenden Ansprüche, **dadurch gekennzeichnet, dass** in einem Körper (V) mehrere erste Führungen (D) angeordnet sind.

20. Anordnung nach einem der vorhergehenden Ansprüche, **dadurch gekennzeichnet, dass** ein Körper (V) die Form eines hohlen, einseitig offenen Zylinders oder Prismas aufweist, der/das einen Grundkörper (A) mit einer Schneideinheit (B) deckelartig umfasst, wobei der Körper (V) und der Grundkörper (A) in Richtung ihrer Achse gegeneinander verstellbar sind.

21. Anordnung nach Anspruch 20, **dadurch gekennzeichnet, dass** der Zylinder (V) oder das Prisma und der Grundkörper (A) zur Verstellung mittels eines Gewindes verdrehbar miteinander verbunden sind.

22. Anordnung nach einem der vorhergehenden Ansprüche, **dadurch gekennzeichnet, dass** die Schnittkante der Klinge senkrecht zur Bewegungsrichtung und senkrecht zur Abtragrichtung liegt.

23. Anordnung nach einem der vorhergehenden Ansprüche, **dadurch gekennzeichnet, dass** die Klinge in Abtragrichtung schräg gestellt ist.

24. Anordnung nach einem der Ansprüche 1 bis 21, **dadurch gekennzeichnet, dass** die Klinge in Abtragrichtung derart geknickt ist, dass die Schnittfläche V-förmig ist.

25. Anordnung nach einem der Ansprüche 1 bis 21, **dadurch gekennzeichnet, dass** die Klinge in Abtragrichtung derart gebogen ist, dass eine konkave Schnittfläche entsteht.

26. Anordnung nach einem der vorhergehenden Ansprüche, **dadurch gekennzeichnet, dass** die Schnittkante der Klinge pfeilförmig in Bewegungsrichtung des Scheibenwischerblattes verläuft.

27. Anordnung nach einem der vorhergehenden Ansprüche, **dadurch gekennzeichnet, dass** Mittel zur Fixierung der Lage der Klinge im Schnittbereich vorgesehen sind.

28. Anordnung nach Anspruch 27, **dadurch gekennzeichnet, dass** die Mittel bewirken, dass die Klinge fest auf an den Schnittbereich unmittelbar angrenzenden Flächen aufliegt.

29. Anordnung nach einem der vorhergehenden Ansprüche, **gekennzeichnet durch** eine Begrenzung der ersten Führung in Abtragrichtung, die mit der Schneideinheit verstellbar ist und eine vorgegebene Position zur Schnittkante in Abtragrichtung aufweist.

30. Anordnung nach einem der vorhergehenden Ansprüche, **dadurch gekennzeichnet, dass** eine Einrichtung zur Messung der Schneidtiefe **dadurch** gebildet wird, dass ein zusammen mit der Klinge verstellbarer Anschlag (Z) vorgesehen ist und eine Führung (Y), welche in mindestens eine der Nuten des Scheibenwischerblattes eingreift, dem Anschlag (Z) gegenübersteht.

31. Anordnung nach Anspruch 30, **dadurch gekennzeichnet, dass** der Anschlag (Z) am Ende eines für das Scheibenwischerblatt vorgesehenen Kanals angeordnet ist und dass die Führung von einem Endbereich der ersten Führung (W) gebildet ist.

32. Anordnung nach Anspruch 30, **dadurch gekennzeichnet, dass** der Anschlag (Z) seitlich aus der Anordnung herausragt und eine an der Längsseite der Anordnung angeformte Leiste die Führung (Y) bildet.

## Claims

1. Arrangement for retro-actively cutting wiper blades, with a first guide (D) which engages in grooves on both sides of the wiper blade, and with a second guide (L) which surrounds the lip (M) of the wiper blade in the vicinity of the edge which is to be retro-actively cut, wherein the second guide (L) forms a cutting unit (B) together with a blade (J), and wherein the cutting unit (B) and the first guide (D) can be adjusted with respect to each other in the removal direction, **characterized in that** the second guide (L) has a fixed width in such a manner that the lip (M) of the wiper blade is guided in a smooth-running manner.

2. Arrangement according to Claim 1, **characterized in that** the second guide (L) narrows in the direction of movement from a greater width to the fixed width.

3. Arrangement according to one of the preceding claims, **characterized in that** the second guide (L) has a depth which surrounds that part of the lip (M) which is to be cut off.

4. Arrangement according to one of the preceding claims, **characterized in that** the second guide (L) widens, starting at the cutting edge of the blade (J), to a waste channel (H).

5. Arrangement according to Claim 4, **characterized in that**, the waste channel (H) has a width and a depth of at least twice the width of the lip (M).

6. Arrangement according to one of Claims 1 to 5, **characterized in that** the first guide (D) is part of a basic body (A), and **in that** the cutting unit (B) is mounted adjustably in the basic body (A).

7. Arrangement according to Claim 6, **characterized in that** a further waste channel (N), the cross section of which corresponds at least to that of the waste channel (H), is arranged in the basic body (A).

8. Arrangement according to either of Claims 6 and 7, **characterized in that**, for adjustment purposes, a spindle (F) is arranged on the cutting unit (B) and is operatively connected in a play-free manner to a spindle nut (E) mounted in a cutout of the basic body (A) .

9. Arrangement according to one of the preceding claims, **characterized in that** the position of the cutting unit (B) can be locked.

10. Arrangement according to one of the preceding claims, **characterized in that** the first guide (D) is longer than the second guide (L).

11. Arrangement according to one of the preceding claims, **characterized in that** the first guide (D) is between 70 mm and 200 mm long.

12. Arrangement according to one of the preceding claims, **characterized in that** the first guide (D) is curved in the longitudinal direction of the wiper blade.

13. Arrangement according to one of the preceding claims, **characterized in that** a measuring device (O, P, Q, R; T, S, U) is provided.

14. Arrangement according to Claim 13, **characterized in that** the measuring device is formed by a scale (T) in a channel receiving the wiper blade, and by a viewing opening (U).

15. Arrangement according to Claim 13, **characterized in that** the measuring device is formed by a scale (T) on both sides of a channel receiving the wiper blade, and by a movable stop (S).

16. Arrangement according to Claim 13, **characterized in that** the measuring device is formed by a movable measuring sensor (O).

17. Arrangement according to one of Claims 1 to 13, **characterized in that** a see-through device is provided at a predetermined distance from the blade, as measured in the removal direction.

18. Arrangement according to one of the preceding claims, **characterized in that** at least one of the guides (D, L) is provided with a friction-reducing surface.

19. Arrangement according to one of the preceding claims, **characterized in that** a plurality of first guides (D) are arranged in a body (V).

20. Arrangement according to one of the preceding claims, **characterized in that** a body (V) is in the form of a hollow cylinder or prism which is open on one side and surrounds a basic body (A) with a cutting unit (B) in the manner of a lid, the body (V) and the basic body (A) being adjustable in relation to each other in the direction of their axis.

21. Arrangement according to Claim 20, **characterized in that** the cylinder (V) or the prism and the basic body (A) are connected rotatably by means of a thread to one another for adjustment.

22. Arrangement according to one of the preceding claims, **characterized in that** the cutting edge of the blade is located perpendicular to the direction of movement and perpendicular to the removal direction.

23. Arrangement according to one of the preceding claims, **characterized in that** the blade is positioned obliquely in the removal direction.

24. Arrangement according to one of Claims 1 to 21, **characterized in that** the blade is bent in the removal direction in such a manner that the cut surface is V-shaped.

25. Arrangement according to one of Claims 1 to 21, **characterized in that** the blade is curved in the removal direction in such a manner that a concave cut surface is produced.

26. Arrangement according to one of the preceding claims, **characterized in that** the cutting edge of the blade runs in an arrow-shaped manner in the direction of movement of the wiper blade.

27. Arrangement according to one of the preceding claims, **characterized in that** means for fixing the position of the blade in the cutting region are provided.

28. Arrangement according to Claim 27, **characterized in that** the means cause the blade to rest fixedly on surfaces directly adjacent to the cutting region.

29. Arrangement according to one of the preceding claims, **characterized by** a boundary of the first guide in the removal direction, which boundary can be adjusted by the cutting unit, and by a predetermined position with respect to the cutting edge in the removal direction.

30. Arrangement according to one of the preceding claims, **characterized in that** a device for measuring the cutting depth is formed in such a manner that a stop (z) which can be adjusted together with the blade is provided, and a guide (Y), which engages in at least one of the grooves of the wiper blade, is located opposite the stop (Z).

31. Arrangement according to Claim 30, **characterized in that** the stop (Z) is arranged at the end of a channel provided for the wiper blade, and **in that** the guide is formed by an end region of the first guide (W).

32. Arrangement according to Claim 30, **characterized in that** the stop (Z) protrudes laterally out of the arrangement and a strip integrally formed on the longitudinal side of the arrangement forms the guide (Y) .

## Revendications

1. Dispositif permettant de recouper des raclettes d'essuie-glaces, comportant un premier guidage (D), qui s'engage dans des rainures sur les deux côtés de la raclette d'essuie-glace, et un deuxième guidage (L), qui comprend la lèvre (M) de la raclette d'essuie-glace à proximité de l'arête à recouper, dans lequel le deuxième guidage (L) forme une unité de coupe (B) avec une lame (J), en ce que l'unité de coupe (B) et le premier guidage (D) sont déplaçables l'un par rapport à l'autre dans la direction d'enlèvement, **caractérisé en ce que** le deuxième guidage (L) présente une largeur fixe, de telle manière que la lèvre (M) de la raclette d'essuie-glace soit guidée librement.

2. Dispositif selon la revendication 1, **caractérisé en ce que** le deuxième guidage (L) se rétrécit dans la direction de mouvement, depuis une plus grande largeur jusqu'à la largeur fixe.

3. Dispositif selon l'une quelconque des revendications précédentes, **caractérisé en ce que** le deuxième guidage (L) présente une profondeur, qui comprend la partie à recouper de la lèvre (M).

4. Dispositif selon l'une quelconque des revendications précédentes, **caractérisé en ce que** le deuxième guidage (L) s'élargit en un canal à déchets (H) en commençant près de l'arête de coupe de la lame (J) .

5. Dispositif selon la revendication 4, **caractérisé en ce que** le canal à déchets (H) présente une largeur et une profondeur valant au moins le double de la largeur de la lèvre (M).

6. Dispositif selon l'une quelconque des revendications 1 à 5, **caractérisé en ce que** le premier guidage (D) fait partie d'un corps de base (A) et **en ce que** l'unité de coupe (B) est montée de façon déplaçable dans le corps de base (A).

7. Dispositif selon la revendication 6, **caractérisé en ce qu'**un autre canal à déchets (N) est disposé dans le corps de base (A), avec une section transversale correspondant au moins à celle du canal à déchets (H).

8. Dispositif selon l'une quelconque des revendications 6 ou 7, **caractérisé en ce qu'**une broche (F) est disposée sur l'unité de coupe (B) pour le déplacement, broche qui est en liaison active sans jeu avec un écrou de broche (E) monté dans un évidement du corps de base (A).

9. Dispositif selon l'une quelconque des revendications précédentes, **caractérisé en ce que** la position de l'unité de coupe (B) peut être bloquée.

10. Dispositif selon l'une quelconque des revendications précédentes, **caractérisé en ce que** le premier guidage (D) est plus long que le deuxième guidage (L).

11. Dispositif selon l'une quelconque des revendications précédentes, **caractérisé en ce que** le premier guidage (D) a une longueur comprise entre 70 mm et 200 mm.

12. Dispositif selon l'une quelconque des revendications précédentes, **caractérisé en ce que** le premier guidage (D) est courbé dans la direction longitudinale de la raclette d'essuie-glace.

13. Dispositif selon l'une quelconque des revendications précédentes, **caractérisé en ce qu'**il est prévu un dispositif de mesure (0, P, Q, R; T, S, U).

14. Dispositif selon la revendication 13, **caractérisé en ce que** le dispositif de mesure est formé par une échelle graduée (T) dans un canal contenant la raclette d'essuie-glace et d'un regard (U).

15. Dispositif selon la revendication 13, **caractérisé en ce que** le dispositif de mesure est formé par une échelle graduée (T) sur les deux côtés d'un canal contenant la raclette d'essuie-glace et par une butée mobile (s) .

16. Dispositif selon la revendication 13, **caractérisé en ce que** le dispositif de mesure est formé par un capteur de mesure mobile (O).

17. Dispositif selon l'une quelconque des revendications 1 à 13, **caractérisé en ce qu'**il est prévu un dispositif d'observation traversant à une distance prédéterminée de la lame, mesurée dans la direction d'enlèvement.

18. Dispositif selon l'une quelconque des revendications précédentes, **caractérisé en ce qu'**au moins un des guidages (D, L) est pourvu d'une surface réduisant le frottement.

19. Dispositif selon l'une quelconque des revendications précédentes, **caractérisé en ce que** plusieurs premiers guidages (D) sont disposés dans un corps (V).

20. Dispositif selon l'une quelconque des revendications précédentes, **caractérisé en ce qu'**un corps (V) présente la forme d'un cylindre ou d'un prisme creux ouvert d'un côté, qui comprend un corps de base (A) avec une unité de coupe (B) à la manière d'un couvercle, dans lequel le corps (V) et le corps de base (A) sont déplaçables l'un par rapport à l'autre dans la direction de leur axe.

21. Dispositif selon la revendication 20, **caractérisé en ce que** le cylindre (V) ou le prisme et le corps de base (A) sont reliés l'un à l'autre en rotation au moyen d'un filet pour le déplacement.

22. Dispositif selon l'une quelconque des revendications précédentes, **caractérisé en ce que** l'arête de coupe de la lame est perpendiculaire à la direction de mouvement et perpendiculaire à la direction d'enlèvement.

23. Dispositif selon l'une quelconque des revendications précédentes, **caractérisé en ce que** la lame est posée en oblique par rapport à la direction d'enlèvement.

24. Dispositif selon l'une quelconque des revendications 1 à 21, **caractérisé en ce que** la lame est pliée dans la direction d'enlèvement, de telle manière que la face de coupe soit en forme de V.

25. Dispositif selon l'une quelconque des revendications 1 à 21, **caractérisé en ce que** la lame est courbée dans la direction d'enlèvement, de telle manière qu'elle forme une face de coupe concave.

26. Dispositif selon l'une quelconque des revendications précédentes, **caractérisé en ce que** l'arête de coupe de la lame est en forme de flèche dans la direction de mouvement de la raclette d'essuie-glace.

27. Dispositif selon l'une quelconque des revendications précédentes, **caractérisé en ce qu'**il est prévu des moyens pour fixer la position de la lame dans la zone de coupe.

28. Dispositif selon la revendication 27, **caractérisé en ce que** les moyens assurent que la lame s'applique fermement sur des faces directement voisines de la zone de coupe.

29. Dispositif selon l'une quelconque des revendications précédentes, **caractérisé par** une limitation du premier guidage dans la direction d'enlèvement, qui est déplaçable avec l'unité de coupe et qui présente une position prédéterminée par rapport à l'aréte de coupe dans la direction d'enlèvement.

30. Dispositif selon l'une quelconque des revendications précédentes, **caractérisé en ce qu'**un dispositif pour mesurer la profondeur de coupe est formé **en ce qu'**il est prévu une butée (Z) déplaçable en même temps que la lame et qu'un guidage (Y), qui s'engage dans au moins une rainure de la raclette d'essuie-glace, est situé en face de la butée (Z).

31. Dispositif selon la revendication 30, **caractérisé en ce que** la butée (Z) est disposée à l'extrémité d'un canal prévu pour la raclette d'essuie-glace et **en ce que** le guidage est formé par une région d'extrémité du premier guidage (w).

32. Dispositif selon la revendication 30, **caractérisé en ce que** la butée (Z) sort latéralement hors du dispositif et qu'une latte façonnée sur le côté longitudinal du dispositif forme le guidage (Y).
